**Europäisches Patentamt**

**European Patent Office**

**Office européen des brevets**

(11) Veröffentlichungsnummer: **0 072 533**
A2

(12) **EUROPÄISCHE PATENTANMELDUNG**

(21) Anmeldenummer: **82107273.3**

(22) Anmeldetag: **11.08.82**

(51) Int. Cl.³: **H 04 N 5/14**
**H 04 N 9/535**

(30) Priorität: **13.08.81 DE 3131988**
**24.09.81 DE 3137989**

(43) Veröffentlichungstag der Anmeldung:
**23.02.83 Patentblatt 83/8**

(84) Benannte Vertragsstaaten:
**AT BE CH FR GB IT LI NL SE**

(71) Anmelder: **Battelle-Institut e.V.**
**Am Römerhof 35 Postfach 900160**
**D-6000 Frankfurt/Main 90(DE)**

(72) Erfinder: **Schmalfuss, Harald, Dr.**
**Rosenring 11 a**
**D-6054 Rodgau 3(DE)**

(72) Erfinder: **Götz, Hans-Joachim**
**Egerstrasse 2**
**D-8523 Baiersdorf(DE)**

(74) Vertreter: **Rupprecht, Klaus, Dipl.-Ing.**
**Am Römerhof 35**
**D-6000 Frankfurt (Main) 90(DE)**

(54) **Verfahren und Vorrichtung zu Ver- und Bearbeitung von Signalen.**

(57) Zur Ver- und Bearbeitung von Signalen, insbesondere von Videosignalen, wird zum Zwecke einer zweidimensionalen Filterung das Eingangssignal einerseits mit der Impulsantwort einer Zeile gefaltet und andererseits um die Dauer einer Zeile verzögert. Bei der Faltung wird das Signal für jeden Koeffizienten der Impulsantwort einer Zeile jeweils um die Dauer eines Bildpunktes verzögert, mit dem betreffenden Koeffizienten der Impulsantwort multipliziert und das Ergebnis aufsummiert. Dieser Vorgang wird für jede Zeile der Impulsantwort wiederholt und alle Faltungsergebnisse werden aufsummiert. Das Ergebnis der Summation entspricht dem Signal eines Bildes, das mit einem zweidimensionalen, beliebig reellen Punktbild gefaltet wurde.

Gemäß einem alternativen Verfahren wird das Eingangssignal auf N Leitungen eingespeist. Die Zahl N wird entsprechend der gewünschten Genauigkeit des kontinuierlichen Filterverlaufs festgelegt. In jeder Leitung wird das Signal mit einer vorgebbaren Trägerfrequenz moduliert, gefiltert, demoduliert und anschließend verstärkt bzw. abgeschwächt, und die resultierenden Signale werden aufsummiert. Zur zweidimensionalen Filterung wird die gesamte Signalbandbreite rotierend abgetastet und anschließend an die Filterung die Rotation rückgängig gemacht.

Figur 2

0072533

392-41/18/81             4. August 1982

CASCH/KRI

BATTELLE - INSTITUT E.V., Frankfurt/Main

## Verfahren und Vorrichtung zur

## Ver- und Bearbeitung von Signalen

Die Erfindung betrifft Verfahren zur Ver- und Bearbeitung von Signalen, insbesondere von Videosignalen sowie Vorrichtungen zur Durchführung dieser Verfahren und ermöglicht insbesondere eine zweidimensionale Filterung.

Die Ver- und Bearbeitung zweidimensionaler Bilder kann die Manipulation von Grauwerten, von Farbton und Farbsättigung sowie des Ortsfrequenzspektrums des Bildes umfassen. Ziel einer solchen Manipulation ist in der Regel entweder eine Datenreduktion, eine Bildrestauration oder eine für den menschlichen Beobachter verbesserte Darstellung spezieller Bildinhalten. Es ist bekannt, die Manipulation mit den bekannten klassischen kohärenten oder inkohärenten optischen Methoden durchzuführen. Man kann auch nach einer optisch-elektrischen Wandlung in das analoge eindimensionale elektronische Zeitsignal eingreifen. Nach der optisch-elekltronischen Wandlung und Digitalisierung kann das Bild mit reinen digitalen Verfahren be- und verarbeitet werden.

Der große Nachteil der analog-elektronischen Signalverarbeitung, insbesondere von Videobildsignalen, besteht darin, daß die Operation nur eindimensional, nämlich in Abtastrichtung wirksam wird, da ein zweidimensionales Bild in ein eindimensionales Zeitsignal verwandelt wird.

Nach einer bekannten Methode wird die Signalverarbeitung unter Verwendung eines Amplitudenfilters vorgenommen, wobei das Signal in seiner gesamten Bandbreite gefiltert wird. Der wesentliche Nachteil liegt jedoch darin, daß die Filter in der Regel nicht variabel sind, beliebige Filterfunktionen nicht eingestellt werden können und Phasen- bzw. Laufzeitprobleme resultieren.

Der vorliegenden Erfindung liegt daher die Aufgabe zugrund, die Nachteile bekannter Methoden zu vermeiden und Verfahren bzw. Vorrichtungen anzugeben, mit denen eine variable ein- bzw. zweidimensionale Echtzeitfilterung speziell von Videosignalen durchführbar ist.

Es hat sich nun gezeigt, daß sich diese Aufgabe mit einem Verfahren der eingangs genannten Art lösen läßt, wenn das Eingangssignal einerseits mit der Impulsantwort einer Zeile gefaltet und andererseits um die Dauer einer Zeile verzögert wird, wobei bei der Faltung das Signal für jeden Koeffizienten der Impulsantwort einer Zeile jeweils um die Dauer eines Bildpunkts verzögert, mit dem betreffenden Koeffizienten der Impulsantwort multipliziert und das Ergebnis aufsummiert wird, und wenn dieser Vorgang für jede Zeile der Impulsantwort wiederholt wird und alle Faltungsergebnisse aufsummiert werden, wobei das Ergebnis der Summation dem Signal eines Bildes entspricht, das mit einem zweidimensionalen, beliebig reellen Punktbild gefaltet wurde. Vorteilhafte Weiterbildungen des erfindungsgemäßen Verfahrens werden in den Ansprüchen 2 bis 6 beschrieben. Ansprüche 7 bis 15 betreffen Vorrichtungen zur Durchführung dieses Verfahrens.

Bei dem erfindungsgemäßen Verfahren wird vorzugsweise die Verzögerung der Signale digital und die Multiplikation mit dem Koeffizienten der Impulsantwort und die Summation der Ergebnisse analog durchgeführt. Das Eingangssignal muß dabei von analog zu digital gewandelt werden. Die für die Faltung in den Zeilen notwendige Verzögerung kann durch digitale Schieberegister und die Verzögerung um die Dauer der Zeilen durch digitale Schieberegister oder Speicher mit wahlfreiem Zugriff (RAM) vorgenommen werden. Der hierfür notwendige Takt wird mit dem Synchronanteil des Eingangssignals verknüpft. Ferner ist es möglich, die Multiplikation mit dem Koeffizienten der Impulsantwort und die Wandlung des verzögerten Eingangssignals für diesen Koeffizienten von digital zu analog in einem Schritt mit Hilfe eines multiplizierenden Digital/Analog-Wandlers vorzunehmen und die Summation der Multiplikationsergebnisse in einem Schritt analog durchzuführen. Vorzugsweise wird zur synchronen Bereitstellung des gefilterten und ungefilterten Signals der Laufzeitunterschied zwischen dem Eingangs- und Ausgangssignal ausgeglichen. Zum Zwecke einer adaptiven Filterung können die Koeffizienten manuell oder vom Rechner gesteuert über Zwischenspeicher und weitere Digital/Analog-Wandler festgelegt werden.

Die erfindungsgemäße Vorrichtung besteht im wesentlichen aus Transversalfiltern und Zeilenverzögerungsleitungen, die in einer dem geforderten Punktbild entsprechenden Anzahl vorhanden sind. Jeder Transversalfilter weist einen eigenen Summierer auf, dessen Ausgänge mit einem Hauptsummierer zusammengefaßt sind. Zur Realisierung eines Punktbildes mit n-Zeilen sind n-Transversalfilter und n-1 Zeilenverzögerungsleitungen vorgesehen. Vorzugsweise wird die Verzögerungsleitung jedes Transversalfilters mit dem Eingang einer Zeilenverzögerungsleitung verbunden. Die Ausgänge der Zeilenverzögerungsleitungen sind wiederum auf dem Eingang des nächstfolgenden Transversalfilters für die nächste Zeile geführt.

Nach einer bevorzugten Ausführungsform werden alle Zeilenverzögerungsleitungen unmittelbar in Kette geschaltet. Deren Ausgänge werden außerdem auf die Eingänge der Transversalfilter geführt. Der erste Transversalfilter ist jedoch mit dem unverzögerten Eingangssignal verbunden. Die Länge jeder Zeilenverögerungsleitung wird zusätzlich der jeweiligen Transversalfilterlänge angepaßt. Bei dieser Ausführungsform wird aus dem normengerechten Videosignal der Synchronanteil abgetrennt und mit dessen Hilfe wird eine Taktfrequenz erzeugt, die an alle Zeilenverzögerungsleitungen und Transversalfilter zuführbar ist. Zur digitalen Realisierung der Verzögerungen wird ein Analog/Digital-Wandler den Zeilenverzögerungsleitungen bzw. Transversalfiltern vorgeschaltet und mit dem Taktgenerator verbunden. Die Transversalfilter werden mit Schieberegistern versehen, während die Zeilenverzögerungsleitungen digitale Schreib-Lese-Speicher mit wahlfreiem Zugriff aufweisen. Somit kann während einer Taktperiode ein Speicherplatz angewählt,der Inhalt in ein Ausgangsregister übertragen und der neue Eingangswert eingeschrieben werden.

Die Schieberegister in jedem Transversalfilter bestehen vorzugsweise aus hintereinander geschalteten D-flip-flops, zwischen denen Anzapfungen vorgesehen sind, die jeweils mit einem multiplizierenden Digital/Analog-Wandler verbunden sind. Die Digital/ Analog-Wandler liefern als Ausgangssignal sowohl das Produkt des anliegenden Digitalwertes mit einem einstellbaren Analogwert als auch dessen binären Komplements. Die erzeugten komplementären Ausgangssignale können je nach gefordertem Vorzeichen auf dem Plus- bzw. Minus-Eingang eines nachgeschalteten Summierverstärkers eingegeben werden. Für den einstellbaren Analogwert kann vorzugsweise eine einzige Referenzspannungsquelle vorgesehen sein.

0072533

Die erfindungsgemäße Aufgabe läßt sich auch mit einem Verfahren lösen, bei dem das Signal auf N Leitungen eingespeist wird, wobei die Zahl N entsprechend der gewünschten Genauigkeit des kontinuierlichen Filterverlaufs festgelegt wird, und bei dem in jeder Leitung das Signal mit einer vorgebbaren Trägerfrequenz moduliert, gefiltert, demoduliert und anschließend verstärkt bzw. abgeschwächt wird und wenn die resultierenden Signale aufsummiert werden. Die jeweilige Trägerfrequenz $f_{Tn}$ wird erfindungsgemäß nach der Formel

$$f_{Tn} = C \cdot f_{max} + n \cdot \frac{f_{max}}{N}$$

festgelegt, wobei $C \geq 2$, $f_{max}$ die maximale Signalbandbreite und n eine Zahl zwischen 1 und N bedeuten. Zur zweidimensionalen Filterung wird das gesamte Eingangssignal rotierend abgetastet, und anschließend an die Filterung wird die Rotation rückgängig gemacht.

Bei der erfindungsgemäßen Vorrichtung zur eindimensionalen Filterung sind N Leitungen vorgesehen, die jeweils einen Modulator, Amplitudenfilter, Demodulator, regelbaren Verstärker und einen PLL-Kreis (Phase-Locked-Loop) enthalten. Durch den PLL-Kreis ist dabei für die Modulation bzw. Demodulation eine Trägerfrequenz erzeugbar. Die resultierenden Signale aus allen N Leitungen werden zu einem Summierverstärker mit Tiefpaßfilter geführt. Die einzelnen PLL-Kreise werden mit einer einzigen Ausgangsfrequenzquelle verbunden.

Zur zweidimensionalen Filterung wird vor der Filterbank eine Einrichtung zur rotierenden Abtastung des Eingangssignals, z. B. eine Kamera, deren Zeilenablenkung azimutal verändert werden kann, vorgesehen. Anschließend an die Filterung wird die Rotation durch Verwendung eines analogen oder digitalen Schreib/ Lese-Speichers oder einer aus Monitor und Kamera bestehenden Einheit aufgehoben. Ferner kann ein analoger oder digitaler Summierspeicher vorhanden sein.

Die Vorteile des erfindungsgemäßen Verfahrens und der vorgeschlagenen Vorrichtungen liegen darin, daß man nur einen einzigen Filter für alle Frequenzbänder berechnen muß, der dann natürlich hinsichtlich der Phasenlinearität auch optimal korrigiert werden kann. Da für alle Frequenzbänder der Phasengang gleich ist, ist auch der resultierende Phasengang für das Gesamtfilter im wesentlichen linear.

Die Erfindung wird anhand von beiliegenden, lediglich eine Ausführungsform darstellenden Zeichnungen näher erläutert. Es zeigen in schematischer Vereinfachung:

Fig. 1    den Prinzipaufbau eines Transversalfilters;

Fig. 2    das erfindungsgemäße Prinzip eines zweidimensionalen Transversalfilters für Videosignale;

Fig. 3    das Blockschaltbild einer bevorzugten Ausführungsform der erfindungsgemäßen Vorrichtung;

Fig. 4    das Schaltbild einer Zeilenvergrößerungsleitung;

Fig. 5    das Schaltbild eines Transversalfilters;

Fig. 6    a) bis e) das Frequenzschema bei dem, einen alternativen Lösungsweg darstellenden Verfahren;

Fig. 7    eine Anordnung zur Durchführung dieses Verfahrens, zum Zwecke einer eindimensionalen Filterung und

Fig. 9    eine weitere Ausführungsform zur zweidimensionalen Filterung.

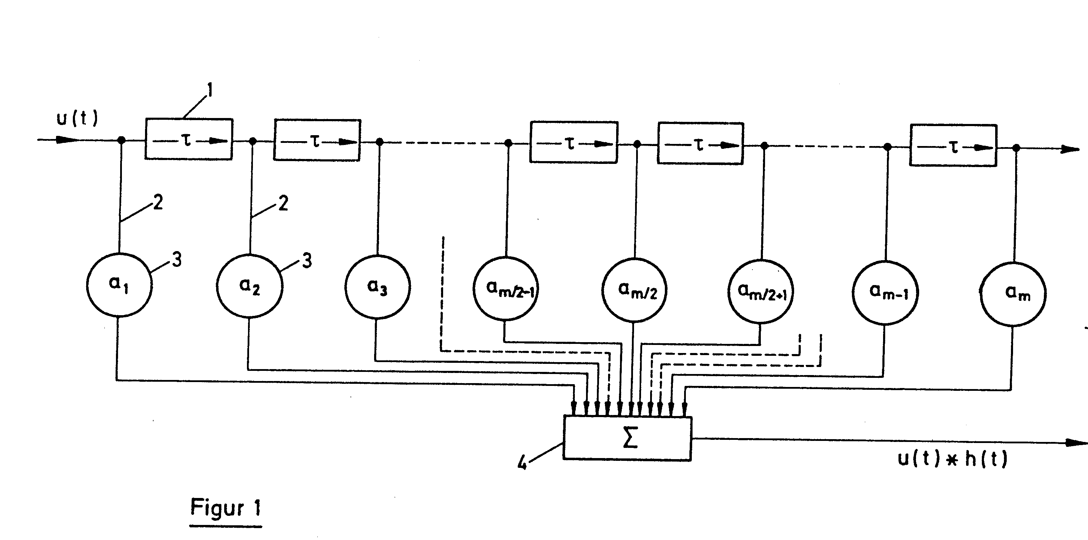

Die Beeinflussung von Bild-Ortsfrequenzen im Frequenzraum beruht darauf, daß das betreffende Bild-Frequenzspektrum mit einer Operatorfunktion multipliziert wird. Transformiert man diesen Vorgang in den Ortsraum, so entspricht das mathematisch dem Vorgang, daß das Bild mit der Fourier-Transformation eben dieser Operatorfunktion gefaltet wird. Diese Vorgehensweise ist bekannt. Jedes elektronische oder optische lineare Filter läßt sich äquivalent im Frequenz – und im Zeit- bzw. Ortsbereich beschreiben. Eine Realisierung im Zeitbereich entspricht der Faltung des Zeitsignals mit der Impulsantwort des Filters. Dies stellt das bekannte Prinzip des Transversalfilters oder Echoentzerrers dar. Das Prinzip eines solchen Transversalfilters ist in Fig. 1schematisch dargestellt. In einem normengerechten Videosignal entspricht die Zeitdauer einer Zeile einem vertikalen Schritt von zwei Vollbildzeilen, wegen des Halbbild-Zeilensprung-Verfahrens. Das heißt, man bekommt zu einem gegebenen Bildpunkt den zwei Zeilen darüber oder darunter liegenden, wenn man im Videosignal um eine Zeilenperiode zurück- oder vorgeht.

Diese Zeit muß so genau eingehalten werden, daß der Fehler kleiner wird als die Zeitdauer der Darstellung eines Bildpunktes. Dabei ist bereits an eine Zeitquantisierung gedacht; diese muß mit einer Taktperiode

$$\tau < \frac{1}{2f_s}$$

erfolgen, wenn mit $f_s$ die höchste vorkommende Signalfrequenz, z.B. ca. 5 MHz, bezeichnet wird.

In Fig. 1 werden die Bauteile eines solchen eindimensionalen Transversalfilters gezeigt. Das Eingangssignal U(t) wird zu einem Schieberegister 1 geführt und dort um eine Bildpunktdauer verzögert. Vor dem Schieberegister 1 sowie nach jedem folgenden Schieberegister sind Anzapfungen 2 vorgesehen, in denen das jeweils anliegende Signal mit vorgegebenen Koeffizienten ($a_1$, $a_2$ ... $a_m$) multipliziert wird. Die Ausgänge dieser Multiplikatoren 3 werden über einen Summierverstärker 4 aufsummiert. Das gefilterte Ausgangssignal entspricht der Funktion U (t)*h(t). Weiterhin liegt am Ausgang des letzten Schieberegisters ein ungefiltertes aber um (m-1)$\tau$ verzögertes Signal, wenn mit (m-1) die Zahl der einzelnen Schieberegister gemeint ist.

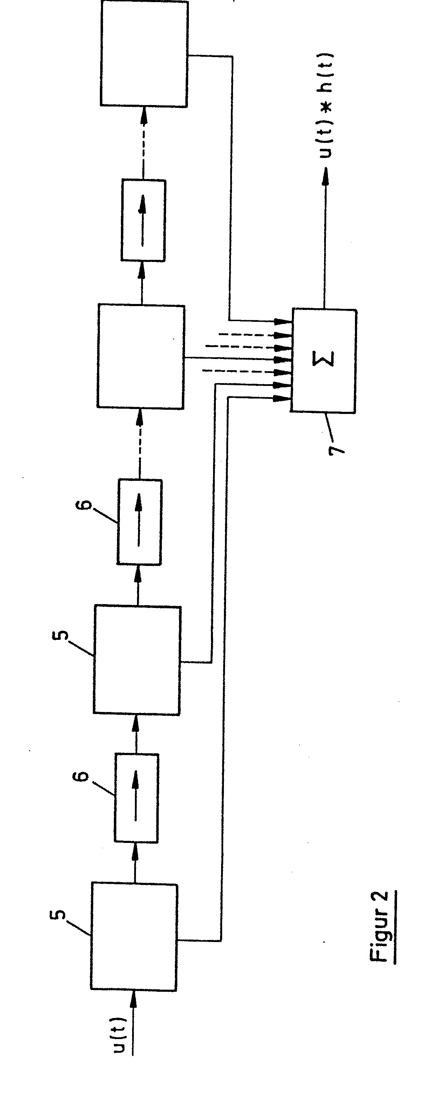

Eine erfindungsgemäße Anordnung, mit der die zweidimensionale Filterung der Videosignale erfolgen kann und die unter Verwendung mehrerer in Fig. 1 gezeichneten Transversalfiltern aufgebaut ist, wird in Fig. 2 schematisch dargestellt.

Das Eingangssignal U(t) wird durch Transversalfilter 5 geschickt, dessen Aufbau unter Fig. 1 diskutiert wurde. Zwischen jeweils zwei Transversalfiltern 5 ist eine Zeilenverzögerungseinrichtung 6 geschaltet, wobei das ungefilterte aber verzögerte Signal der jeweiligen Zeilenverzögerungseinrichtung 6 zugeführt wird. Die gefilterten Signale jedes Transversalfilters 5 werden in einem Hauptsummierverstärker 7 aufsummiert. Am Ausgang des Hauptsummierverstärkers 7 erhält man dann das zweidimensional gefilterte Signal entsprechend der Funktion U(t)*h(t).

Soll der Filter beispielsweise über ein Fenster von 11 Zeilen eines Halbbildes arbeiten, dann heißt das, daß eine Verzögerungseinheit von 640 ms, wenigstens auf 40 ns genau eingehalten werden muß. Ds entspricht 0,00625 % bei einer Signalbandbreite von 5 MHz. Dies ist nur mit digitaler Technologie möglich. Daher wird über einen Phase-locked-loop (PLL)-Kreis eine mit dem Synchronsignal des Videosignals verkoppelte Taktfrequenz von 12 MHz erzeugt und das damit die als Verzögerungsleitung dienenden Schieberegister und als Schieberegister verwendeten RAMs angesteuert. Bei jeder Anzapfung der Verzögerungsleitung ist eine Multiplikation mit einem konstanten, aber einstellbaren Faktor notwendig. In analoger Technik entspräche das einem Potentiometer, während die Verwendung von digitalen Multiplizierern einen untragbaren Aufwand und Energiebedarf bedeuten würden. Es sind ja Signale mit einer Taktperiode von ca. 80 ns, 8 Bit parallel zu verarbeiten. Außerdem stünden für die anschließend notwendige Summation nur digitale Bausteine mit je zwei Eingängen zur Verfügung. Es würden also pro einstellbaren Koeffizienten je ein Multiplizierer und Addierer benötigt. Stattdessen werden erfindungsgemäß monolithisch integrierte, schnelle Digital/Analog-Wandler verwendet, die außer der Digital/Analog-Wandlung die Multiplikation über den Referenzspannungseingang gestatten. Sie liefern zwei komplementäre Ausgangsströme, die einem mit diskreten Bauelementen gebauten Summierverstärker zugeführt werden. Die von Hand einzustellenden Potentiometer können auch durch weitere Digital/Analog-Wandler mit digitalem Eingangsregister, die wiederum rechnergesteuert besetzt werden, ersetzt werden. Auf diese Weise kann z.B. ein adaptives, mikroprozessorgesteuertes zweidimensionales oder auch eindimensionales Transversalfilter für jeden Frequenzbereich von 0 bis ca. 5 MHz realisiert werden.

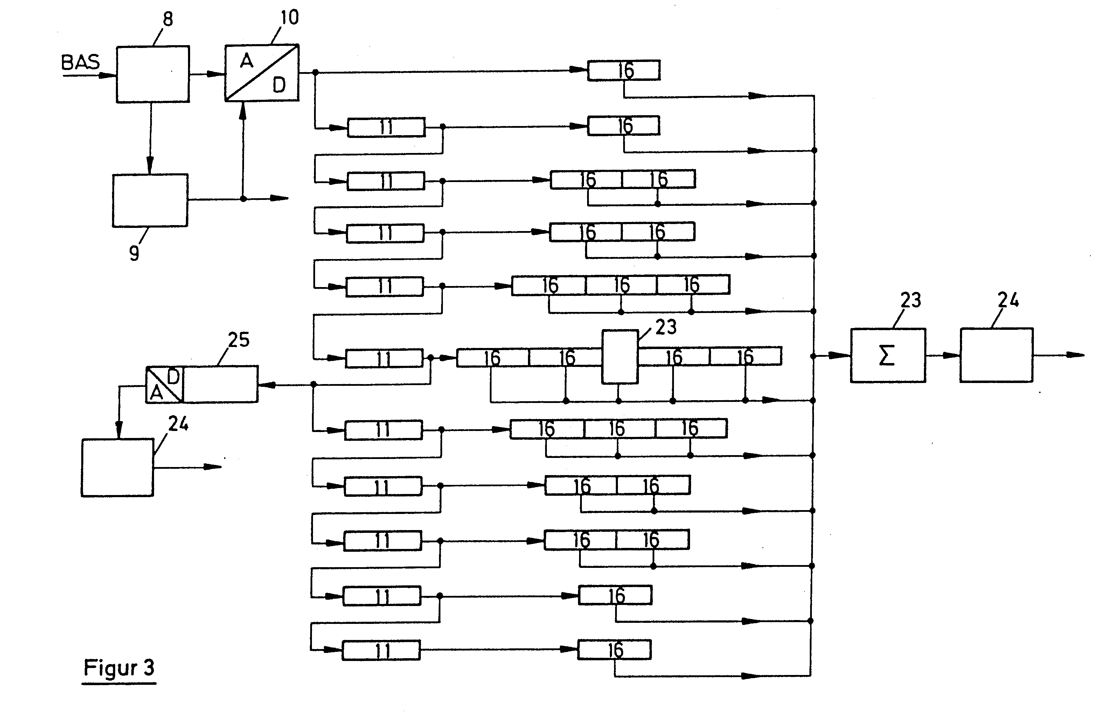

Die in Fig. 3 dargestellte bevorzugte Ausführungsform der erfindungsgemäßen Vorrichtung besteht aus folgenden Baugruppen: Aus dem von der Kamera gefilterten BAS-Signal wird durch den BAS-Auftrenner 8 der Synchronimpuls abgetrennt, im Videokanal wird er ausgetastet. Von der Vorderflanke des Synchronimpulses wird durch den Taktgenerator 9 ein auf 12 MHz arbeitender PLL synchronisiert. Das so erhaltene Taktsignal wird nun von den anschließenden Baugruppen benötigt.

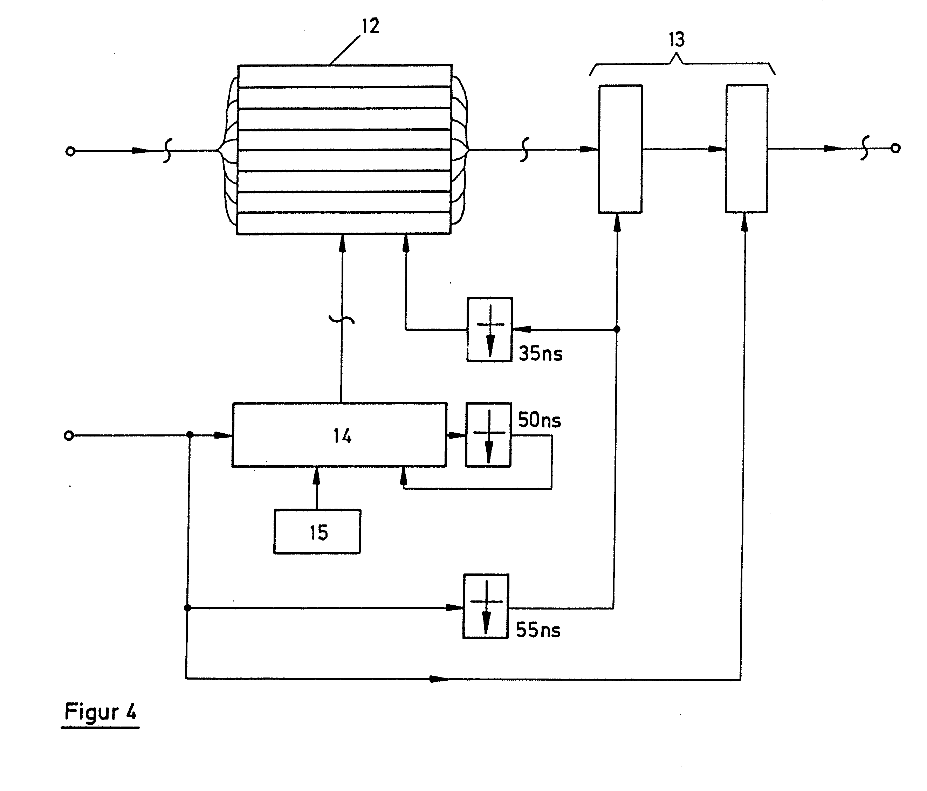

Anschließend an die BAS-Trenner 8 wird ein Analog/Digital-Wandler 10 vorgesehen. Hier wird der integrierte Schaltkreis TDJ 1007 der Firma TRW verwendet. Es wird ein mit 8 Bit digitalisiertes Videosignal mit einer Taktfrequenz von 12 MHz erzeugt. Die Zeilenverzögerer 11 sind in Kette geschaltet. Nach außen hin wirkt diese Baugruppe wie ein digitales Schieberegister mit 8 Bit Auflösung, einstellbarer Länge q von ca. 760 Bit bei einer Taktfrequenz von 12 MHz. Ein vereinfachtes Schaltbild dieser Baugruppe 11 ist in Fig. 4 schematisch dargestellt. Vorzugsweise werden schnelle 1-k-TTL-RAM (Fairchild F 93425 APC) verwendet. Innerhalb einer Taktperiode wird ein Speicherplatz bei 12 angewählt, der Inhalt in ein Ausgangsregister 13 übernommen und der Speicherplatz bei 12 neu beschrieben. Ein Taktzähler 14 adressiert nacheinander die Speicherplätze 1 ... q, wobei q bei 15 einstellbar ist.

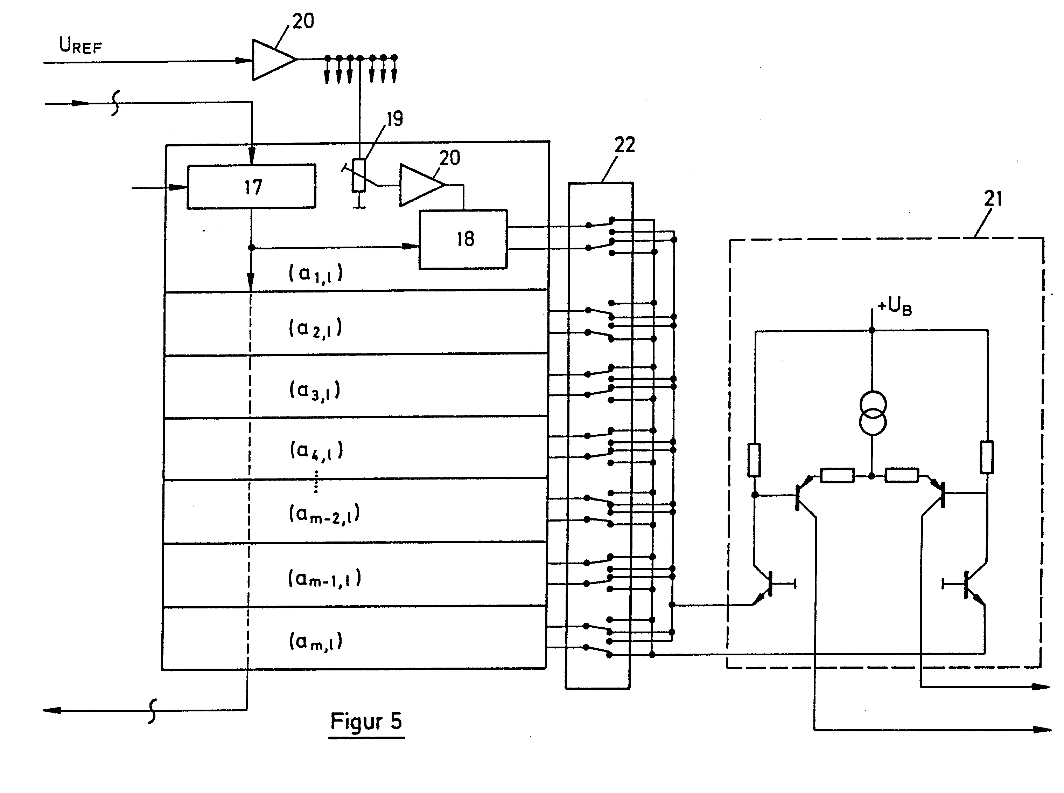

In Fig. 3 sind die Zeilenverzögerer 11 mit Transversalfiltern 16 mit 7 Termen verbunden. Diese Baugruppe wird in Fig. 5 verdeutlicht. Es werden als Schieberegister geschaltete 8 Bit-D-flip-flops 17 zur Verzögerung um je eine Abtastperiode benutzt. Jede Anzapfung für die Multiplikation mit den Koeffizienten $a_{1,1}, a_{2,1} \ldots a_{m,1}$, wobei $1 E (1 \ldots n)$ bedeutet, ist ein schneller multiplizierender Digital/Analog-Wandler 18 angeordnet. Die Koeffizienteneinstellung geschieht durch die Einstellung einer Gleichspannung an Trimmpotentiometern 19. Diese Gleichspannungen werden über Trennverstärker 20 den Referenzspannungseingängen der Digital/Analog-Wandler 18 geführt. Außerdem enthält diese Baugruppe eine erste Summierstufe 21, die einen Ausgangsstrom entsprechend der Summe der Ausgangssignale der sieben Digital/Analog-Wandler erzeugt. Der Schalter 22 dient zur Einstellung der Vorzeichen der Koeffizienten.

In Fig. 3 enthält der Hauptsummierverstärker 23 Bauteile für die Bildung des Zentralterms $a_{00}$ und darin wird das Ausgangssignal des Filters als Summe der Ausgangssignale aller Baugruppen 16 erhalten.

Anschließend an den Hauptsummierverstärker 23 wird ein BAS-Mischer 24 vorgesehen, mit dem aus dem verarbeiteten Videosignal wieder ein normgerechtes BAS-Signal hergestellt wird.

Für Anwendungen, bei denen außer dem gefilterten Videosignal synchron dazu auch das Ungefilterte benötigt wird, muß der Laufzeitunterschied zwischen Eingangs-BAS-Signal und Filterausgangssignal ausgeglichen werden. Hierfür wird die Baugruppe 25 vorgesehen. Die Ausgleichung ist durch eine Anzapfung beim Zentralterm $a_{00}$ möglich, doch ergibt sich durch ein zusätzliches 8 Bit-Schieberegister 25 variabler Länge $(0 \ldots 32 \text{ Bit})$ die Möglichkeit, weitere Differenzlaufzeiten zwischen gefilterten und ungefilterten Signalen in einer nachgeschalteten Signalverarbeitung zu kompensieren.

Die in Fig. 3 dargestellte Vorrichtung wird modular aufgebaut. Jede Baugruppe kann auf einer Norm-Europakarte 100 x 160 mm mit 31-poliger Steckleiste untergebracht werden. Für eine Erweiterung des Filters in Zeilenrichtung werden weitere Transversalfilter gebraucht, für eine Erweiterung dazu in senkrechter Richtung zusätzlich weitere Zeilenverzögerer. Der Gesamtleistungsbedarf der realisierten Anordnung liegt in der Größenordnung 100 bis 150 Watt.

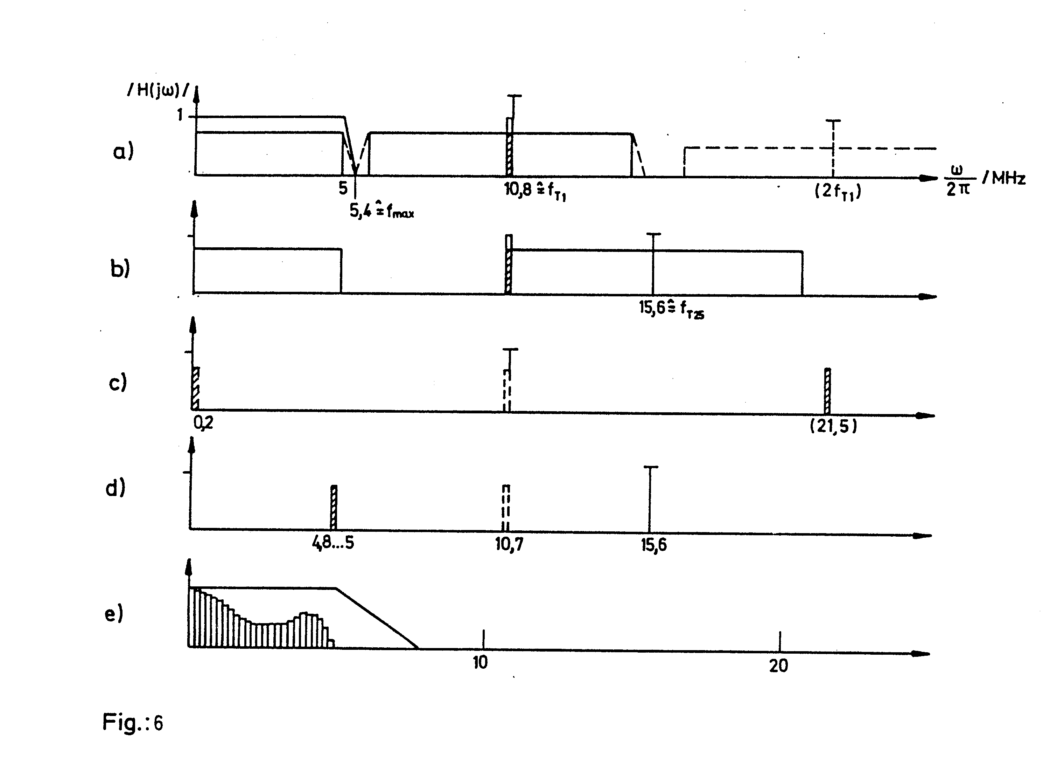

Aus Fig. 6a) bis e) geht eine weitere Möglichkeit zur variablen Echtzeitfrequenz-Filterung hervor. Im Diagramm a) ist für n = 1 die Lage des mit einer Trägerfrequenz $f_{t1}$ modulierten Basisbandes in der Frequenzskala dargestellt. Beispielsweise beträgt hier $f_{max}$ = 5 MHz und $f_{T1}$ = 10,8 MHz. Die verwendeten Bandfilter haben eine Mittenfrequenz von 10,7 MHz und eine Durchlaßbandbreite von 200 kHz. Der Durchlaßbereich wird in der Zeichnung schraffiert angedeutet. Im Diagramm b) wird die gleiche Situation für n = 25 (N=25), $f_{t25}$ dargestellt. Ein Vergleich von beiden Diagrammen zeigt, daß sich die Trägerfrequenz von 10,8 MHz nach 15,6 MHz verändert, während die Lage und die Form des Bandfilters gleich bleibt.

Diagramme c) und d) zeigen ebenfalls für n=1 und n=25 (N=25) die Lage des durch den Filter herausgeschnittenen Frequenzbandes nach der Demodulation. Bedingt durch die Demodulation treten noch höhere Frequenzterme auf, z.B. bei 21,5 MHz in Fig. 6 c), die wie in Fig. 6 e) gezeigt, durch ein Ausgangstiefpaß abgetrennt werden können. Fig. 6 e) zeigt weiterhin das nach dem Summierverstärker resultierende Signal in Frequenzdarstellung. Der Verlauf der gezeigten Filterkurve wird durch die entsprechende Darstellung der N verschiedenen, regelbaren Verstärker vorgegeben. Die vorgegebene, kontinuierliche Filterfunktion wird dabei mit einer Treppenfunktion angenähert, die Güte der Annäherung ist umso besser je größer N gewählt wird.

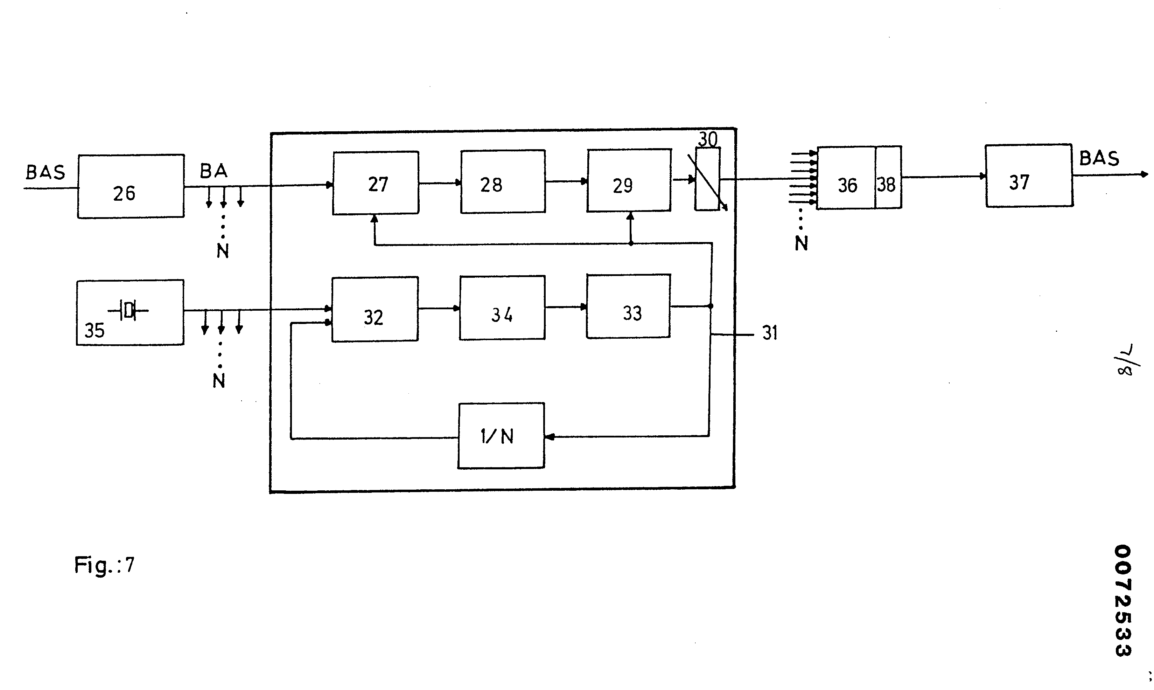

In der in Fig. 7 dargestellten Ausführungsform wird aus dem Eingangs-BAS-Signal durch den Auftrenner 26 der Synchronanteil abgetrennt. Das resultierende BA-Signal wird anschließend auf N Leitungen eingespeist. Jede dieser Leitungen enthält einen Modulator 27, einen Amplitudenfilter 28, einen Demodulator 29, einen nachgeschalteten regelbaren Verstärker 30 sowie einen PLL-Kreis 31, der seinerseits aus einem Phasendetektor 32, einem spannungskontrollierten Oszillator 39, einem Filter 34 besteht. In dem PLL-kreis 31 wird mit Hilfe einer Ausgangs-Referenzfrequenz 35 von z.B. 200 kHz, eine Trägerfrequenz $f_{Tn}$ erzeugt und zum Modulator 27 bzw. Demodulator 29 zugeführt. Für N=54 z.B. wäre die Trägerfrequenz 10,8 MHz, für N=55 kommt man auf 11 MHz usw. bis N=78 für 15,6 MHz.

Anschließend an die Filterung sind ein Summierverstärker 36 und ein Signalmischer 37 vorgesehen. Der Summierverstärker 36 besitzt vorzugsweise einen nachgeschalteten Tiefpaß 38; die Durchlaßbandbreite entspricht der Eingangssignalbandbreite $f_{max}$.

Das Filter 28 kann z.B. ein Bandfilter für 10,7 MHz mit einer Bandbreite von 200 kHz sein. Der erste Bereich von 0 ... 200 kHz wird erhalten, indem man das Videosignal auf einen Träger von 10,8 moduliert und das erhaltende Signalgemisch über den Bandpaß schickt. Nach weiterer Umsetzung mit 10,8 MHz erhält man das Signalband 0... 0,2 MHz.

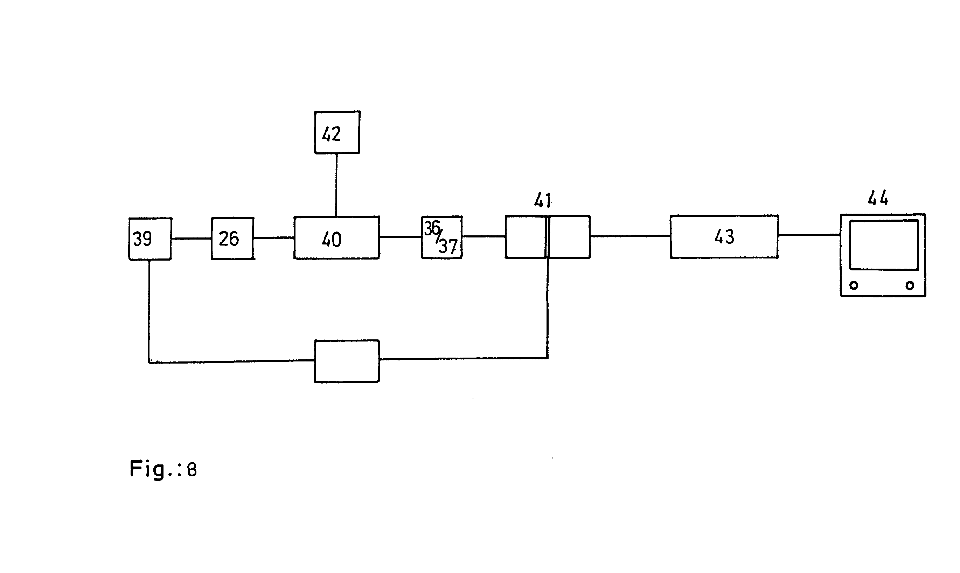

Den Grundaufbau für eine zweidimensionale Filterung zeigt Fig. 8. Das System besteht aus einer Kamera 39, deren Zeilenablenkung azimutal verändert werden kann. Danach folgt der in Fig. 7 beschriebene variable Frequenzfilter 40. Dem nachgeschaltet ist ein analoger Schreib/Lese-Speicher 41, der die rotierende Zeilenabtastung der Kamera 42 wieder rückgängig macht. Als Option kann das gefilterte Bild dann noch über einem weiteren analogen oder digitalen Speicher 43 gleitend aufsummiert werden. Falls man sich jedoch auf wenige Abtastwinkel-Änderungen beschränken kann, ist es auch möglich, diesen Speicher 43 wegzulassen und direkt auf dem Monitor 44 unter Ausnutzung der Augenträgheit aufzusummieren. Die regelbaren Verstärker für die einzelnen Frequenzbereiche können durch eine elektronische Filtersteuerung 42 gesteuert werden, so daß ein adaptives, rechnergesteuertes Echtzeitfilter möglich wird, dessen Frequenzgang zeitlich variabel einstellbar ist und das die Erzeugung von zweidimensionalen Filterfunktionen erlaubt. Die Mannigfaltigkeit dieser Filterfunktionen ist begrenzt durch die Genauigkeit des zweidimensionalen Filters und durch die Winkelauflösung der rotierenden Abtastung.

Die erfindungsgemäßen Verfahren eignen sich für die Mustererkennung, Richtungserkennung, Luftbildauswertung, Pseudo-Farbdarstellung von Frequenzen und Richtungen, Pseudo-Stereo-Darstellung von Intensitäten. Ferner ist der Einsatz dieser Verfahren zur Fingerabdruck-Spurensuche bzw. Fingerabdruck-Aufnahme möglich. Dadurch, daß die Papillarlinien in der Regel kreisförmig verlaufen, reicht eine eindimensionale Filterung nicht aus, da die Papillarlinienteile, die kolinear zur Abtastrichtung der Fernsehkamera verlaufen, weggefiltert werden. Daher kann mit dem erfindungsgemäßen Verfahren zur zweidimensionalen Filterung eine wesentliche Resultatverbesserung erzielt werden.

- 1 -

392-41/18/81
CASCH/KRI

4. August 1982


BATTELLE - INSTITUT E.V., Frankfurt/Main


## Patentansprüche


1. Verfahren zur Ver- und Bearbeitung von Signalen, insbesondere von Videosignalen, dadurch gekennzeichnet, daß das Eingangssignal einerseits mit der Impulsantwort einer Zeile gefaltet und andererseits um die Dauer einer Zeile verzögert wird, wobei bei der Faltung das Signal für jeden Koeffizienten der Impulsantwort einer Zeile jeweils um die Dauer eines Bildpunktes verzögert mit dem betreffenden Koeffizienten der Impulsantwort multipliziert und das Ergebnis aufsummiert wird, und daß dieser Vorgang für jede Zeile der Impulsantwort wiederholt wird und alle Faltungsergebnisse aufsummiert werden, wobei das Ergebnis der Summation dem Signal eines Bildes entspricht, das mit einem zweidimensionalen, beliebig reellen Punktbild gefaltet wurde.


2. Verfahren nach Anspruch 1, dadurch gekennzeichnet, daß die Verzögerung der Signale digital und die Multiplikation mit den Koeffizienten der Impulsantwort und die Summation der Ergebnisse analog durchgeführt wird.

3. Verfahren nach Anspruch 1 oder 2, dadurch gekennzeichnet, daß das Eingangssignal von analog zu digital gewandelt wird und daß die für die Faltung in den Zeilen notwendige Verzögerung durch digitale Schieberegister und die Verzögerung um die Dauer der Zeilen durch digitale Schieberegister oder Speicher mit wahlfreiem Zugriff (RAM) vorgenommen wird und daß der hierfür notwendige Takt mit dem Synchronanteil des Eingangssignals verknüpft wird.

4. Verfahren nach einem der Ansprüche 1 bis 3, dadurch gekennzeichnet, daß die Multiplikation mit dem Koeffizienten der Impulsantwort und die Wandlung des verzögerten Eingangssignals für diesen Koeffizienten von digital zu analog in einem Schritt mit Hilfe eines multiplizierenden Digital/Analog-Wandlers vorgenommen wird und die Summation der Multiplikationsergebnisse in einem Schritt analog durchgeführt wird.

5. Verfahren nach einem der Ansprüche 1 bis 4, dadurch gekennzeichnet, daß zur synchronen Bereitstellung des gefilterten und ungefilterten Signals der Laufzeitunterschied zwischen dem Eingangssignal und dem Ausgangssignal ausgeglichen wird.

6. Verfahren nach einem der Ansprüche 1 bis 5, dadurch gekennzeichnet, daß zum Zwecke einer adaptiven Filterung die Koeffizienten manuell oder vom Rechner gesteuert über Zwischenspeicher und weitere Digital/Analog-Wandler festgelegt werden.

7. Vorrichtung zur Durchführung des Verfahrens nach den Ansprüchen 1 bis 6, dadurch gekennzeichnet, daß in einer dem geforderten Punktbild entsprechende Anzahl von Transversalfiltern (5) und Zeilenverzögerungsleitungen (6) vorgesehen sind, wobei jeder Transversalfilter (5) einen eigenen Summierer (4) aufweist und die Ausgänge dieser Summierer (4) mit einem Hauptsummierer (7) zusammengefaßt sind und daß zur Realisierung eines Punktbildes mit n-Zeilen (n-1)-Zeilenverzögerungsleitungen (6) mit n-Transversalfiltern (5) vorgesehen sind.

8. Vorrichtung nach Anspruch 7, dadurch gekennzeichnet, daß die Verzögerungsleitung jedes Transversalfilters (5) mit dem Eingang einer Zeilenverzögerungsleitung (6) verbunden ist, deren Ausgang auf dem Eingang des nächstfolgenden Transversalfilters für die nächste Zeile geführt ist.

9. Vorrichtung nach Anspruch 7, dadurch gekennzeichnet, daß alle Zeilenverzögerungsleitungen (6,11) unmittelbar in Kette geschaltet sind und deren Ausgänge außerdem auf die Eingänge der Transversalfilter (5,16) geführt sind, wobei der erste Transversalfilter (16') mit dem unverzögerten Eingangssignal verbunden ist.

10. Vorrichtung nach einem der Ansprüche 7 bis 9, dadurch gekennzeichnet, daß die Länge jeder Zeilenverzögerungsleitung (6,11) zusätzlich der jeweiligen Tranversalfilterlänge angepaßt ist.

11. Vorrichtung nach einem der Ansprüche 7 bis 10, dadurch gekennzeichnet, daß zur zeitdiskreten Realisierung der Verzögerungen ein aus dem Synchronanteil des Eingangssignals abgeleiteter Takt (9) an alle Zeilenverzögerungsleitungen (6,11) und Transversalfilter (5,16) zuführbar ist.

12. Vorrichtung nach einem der Ansprüche 7 bis 11, dadurch gekennzeichnet, daß zur digitalen Realisierung der Verzögerungen ein Analog/Digital-Wandler (10) den Zeilenverzögerungsleitungen (6,11) bzw. Transversalfiltern (5,16) vorgeschaltet und mit dem Taktgenerator (9) verbunden ist.

13. Vorrichtung nach Anspruch 12, dadurch gekennzeichnet, daß die Transversalfilter (6,11) mit Schieberegistern versehen sind und die Zeilenverzögerungsleitungen digitale Schreib-Lese-Speicher mit wahlfreiem Zugriff aufweisen, wobei während einer Taktperiode ein Speicherplatz anwählbar, der Inhalt in ein Ausgangsregister übertragbar und der neue Eingangswert einschreibbar ist.

- 4 -

**0072533**

14. Vorrichtung nach Anspruch 12 und 13, <u>dadurch gekennzeichnet,</u> daß in jedem Transversalfilter die Schieberegister aus hintereinander geschalteten D-flip-flops (17) bestehen, zwischen denen Anzapfungen vorhanden sind, die jeweils mit einem multiplizierenden Digital/Analog-Wandler (18) verbunden sind, wobei die multiplizierenden Digital/Analog-Wandler (18) als Ausgangssignal sowohl das Produkt des anliegenden Digitalwertes mit einem einstellbaren Analogwert als auch dessen binären Komplements liefern und daß die erzeugten komplementären Ausgangssignale je nach gefordertem Vorzeichen (22) auf dem Plus- bzw. Minus-Eingang eines nachgeschalteten Summierverstärkers (21) eingebbar sind.

15. Vorrichtung nach Anspruch 14, <u>dadurch gekennzeichnet,</u> daß für den einstellbaren Analogwert eine einzige Referenzspannungsquelle vorgesehen ist.

16. Verfahren zur Be- und Verarbeitung von Signalen, insbesondere von Videosignalen, <u>dadurch gekennzeichnet,</u> daß das Signal auf N-Leitungen eingespeist wird, wobei die Zahl N entsprechend der gewünschten Genauigkeit des kontinuierlichen Filterverlaufs festgelegt wird, und daß in jeder Leitung das Signal mit einer vorgebbaren Trägerfrequenz moduliert, gefiltert, demoduliert und anschließend verstärkt bzw. abgeschwächt wird, und daß die resultierenden Signale aufsummiert werden.

17. Verfahren nach Anspruch 16, <u>dadurch gekennzeichnet,</u> daß die jeweilige Trägerfrequenz $f_{Tn}$ gemäß

$$f_{Tn} = C \cdot f_{max} + n \cdot \frac{f_{max}}{N}$$

festgelegt wird, wobei $C \geq 2$, $f_{max}$ die maximale Signalbandbreite und n eine Zahl zwischen 1 und N bedeuten.

18. Verfahren nach Anspruch 16 oder 17, dadurch gekennzeichnet, daß zur zweidimensionalen Filterung das Eingangssignal rotierend abgetastet und anschließend an die Filterung die Rotation rückgängig gemacht wird.

19. Vorrichtung zur Durchführung des Verfahrens nach Anspruch 16 pder 17, dadurch gekennzeichnet, daß N-Leitungen vorgesehen sind, die jeweils einen Modulator (27), Amplitudenfilter (28), Demodulator (29), regelbaren Verstärker (30)und PLL-Kreis (31) enthalten, und daß durch den PLL-Kreis (31) für die Modulation bzw. Demodulation eine Trägerfrequenz erzeugbar ist, und daß die resultierenden Signale aus allen N-Leitungen zu einem Summierverstärker (36) zuführbar sind.

20. Vorrichtung nach Anspruch 19, dadurch gekennzeichnet, daß dem Summierverstärker (36) ein Tiefpaß (38) nachgeschaltet ist.

21. Vorrichtung nach Anspruch 19 oder 20, dadurch gekennzeichnet, daß die einzelnen PLL-Kreise (31) mit einer einzigen Ausgangsfrequenzquelle (35) verbunden sind.

22. Vorrichtung nach einem der Ansprüche 19 bis 21, zur Durchführung des Verfahrens nach Anspruch 18, dadurch gekennzeichnet, daß vor der Filterung eine Einrichtung (39) zur rotierenden Abtastung des Eingangssignals und anschließend an die Filterung eine Einrichtung (41) zur Aufhebung der Rotation vorgesehen sind.

23. Vorrichtung nach Anspruch 22, dadurch gekennzeichnet, daß die Einrichtung (41) zur Aufhebung der Rotation aus einem analogen oder digitalen Schreib/Lese-Speicher oder aus Monitor und Kamera besteht.

24. Vorrichtung nach Anspruch 22 oder 23, <u>dadurch gekennzeich-net,</u> daß eine Filtersteuerung (42) vorhanden ist, die auf die regelbaren Verstärker (30) wirkt und mit der beliebige zweidimensionale Filterfunktionen erzeugbar sind.

25. Vorrichtung nach einem der Ansprüche 21 bis 23, <u>dadurch ge-kennzeichnet,</u> daß ein analoger oder digitaler Summierspei-cher (43) vorhanden ist.

Figur 1

u(t)

u(t) ∗ h(t)

0072533

Figur 2

u(t)

u(t) \* h(t)

2/8

0072533

Figur 3

Figur 4

0072533

Figur 5

Fig.:6

Fig.:7

0072533

Fig.:8